(19) Europäisches Patentamt
European Patent Office
Office européen des brevets

(11) **EP 4 304 075 A1**

(12) **EUROPEAN PATENT APPLICATION**

(43) Date of publication:
**10.01.2024 Bulletin 2024/02**

(21) Application number: **22182764.5**

(22) Date of filing: **04.07.2022**

(51) International Patent Classification (IPC):
**H02M 7/493** $^{(2007.01)}$  **H02M 7/487** $^{(2007.01)}$
**H02M 1/12** $^{(2006.01)}$  **H02M 1/00** $^{(2006.01)}$

(52) Cooperative Patent Classification (CPC):
**H02M 1/12; H02M 7/487; H02M 7/493;**
H02M 1/0012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB SCHWEIZ AG**
**5400 Baden (CH)**

(72) Inventors:
• **DORFLING, Martinus David**
  **5400 Baden (CH)**
• **KARACA, Orcun**
  **8008 Zürich (CH)**
• **GEYER, Tobias**
  **5408 Ennetbaden (CH)**
• **TSOUMAS, Ioannis**
  **8032 Zürich (CH)**

(74) Representative: **Qip Patentanwälte**
**Dr. Kuehn & Partner mbB**
**Goethestraße 8**
**80336 München (DE)**

(54) **MODEL PREDICTIVE PULSE PATTERN CONTROL FOR MULTI-CONVERTER SYSTEM**

(57) A method for controlling an electrical converter system (10) with at least two electrical converters (28a, 28b) comprises: determining a pulse pattern ($A_1$, $U_1$; $A_2$, $U_2$) for each electrical converter (28a, 28b) from a reference converter voltage of the respective converter (28a, 28b), wherein each pulse pattern ($A_1$, $U_1$; $A_2$, $U_2$) comprising switching times ($A_1$;$A_2$) and switching transitions ($U_1$; $U_2$) for the respective electrical converter (28a, 28b); determining a sum current reference ($i^*_{sum}$) and at least one difference current reference ($i^*_{diff}$) produced by the pulse pattern ($A_1,U_1;A_2,U_2$) and determining a measured sum current ($i_{sum}$) and at least one measured difference current ($i_{diff}$) from measurements in the electrical converter system (10); determining a sum current error ($i_{sum,err}$) and at least one difference current error ($i_{diff,err}$), wherein the sum current error ($i_{sum,err}$) is determined by subtracting the measured sum current ($i_{sum}$) from the sum current reference ($i^*_{sum}$), and a difference current error ($i_{diff,err}$) is determined by subtracting the respective measured difference current ($i_{diff}$) from the difference current reference ($i^*_{diff}$); determining a sum flux modification ($\Delta\psi_{sum}$) by multiplying a gain ($\tilde{L}_l$) to the sum current error ($i_{sum,err}$) and at least one difference flux modification ($\Delta\psi_{diff}$) by multiplying a gain ($L_s$) to the respective difference current error ($i_{diff,err}$); mapping the sum flux modification ($\Delta\psi_{sum}$) and the at least one difference flux modification ($\Delta\psi_{diff}$) to a converter flux modification ($\Delta\psi_{1,abc}$, $\Delta\psi_{2,abc}$) for each electrical converter (28a, 28b); modifying the pulse pattern ($A_1$, $U_1$; $A_2$, $U_2$) for each electrical converter (28a, 28b) by moving the switching times, such that the converter flux modification ($\Delta\psi_{1,abc}$, $\Delta\psi_{2,abc}$) is compensated by the modified pulse pattern ($u_{1,abc}$, $u_{2,abc}$) with the moved switching times; and applying the modified pulse patterns ($u_{1,abc}$, $u_{2,abc}$) to the electrical converters (28a, 28b).

Fig. 10

**Description**

FIELD OF THE INVENTION

The invention relates to the field of high power converter control. In particular, the invention relates to a method, a computer program, a computer-readable medium and a controller for controlling an electrical converter system. The invention also relates to the electrical converter system.

BACKGROUND OF THE INVENTION

Traditionally, carrier-based pulse-width modulation (CB-PWM) with a linear control scheme (such as voltage-oriented control) is used to address the control problem. However, carrier-based pulse-width modulation usually requires high pulse numbers (i.e., the ratio between the device switching frequency and fundamental component) to meet the harmonic requirements. For medium-voltage systems, high pulse numbers are not an option due to the high switching losses. To meet the harmonic standards while also operating the converter at a low switching frequency, it is expedient to use OPPs. OPPs are offline-calculated switching sequences that yield optimal harmonic distortions for a given pulse number. However, in order to obtain low harmonic distortions, OPPs relinquish having one switching transition per phase during a modulation interval. Therefore, a fixed modulation interval - and regularly-spaced instants where the fundamental component can be conveniently sampled - does not exist. This results in both the fundamental component and ripple being sampled, which complicates the controller design. Typically, traditional linear controllers are simply tuned slow with additional filters to not react to the ripple. Consequently, the controller is sluggish during transients. Moreover, using linear controllers with OPPs requires OPPs to have smooth angles, thus resulting in additional constraints in the optimization problems, which diminishes harmonic performance of OPPs.

To this end, model predictive pulse pattern control (MP$^3$C) is proposed, see for example US 8 766 570 B2 or EP 2 469 692 A1. MP$^3$C is a predictive control method that achieves fast closed-loop control of OPPs by manipulating their switching instances. MP$^3$C solves the high-bandwidth control problem by controlling the instantaneous flux (i.e. the fundamental component and the ripple together) of an electrical machine around its (optimal) steady-state trajectory. No filters or estimators are required to extract the fundamental component, and no restrictions are enforced on the smoothness of the switching angles. This results in a controller with deadbeat-like performance during transients while also having the superior harmonic performance of OPPs during steady-state operation.

As described in EP 2 891 241 B1, during large transients and disturbances, additional pulses may be inserted to shorten the settling time.

In EP 3 729 637 A1, to extend the method to high pulse numbers, a carrier-based MP$^3$C method is proposed to generate CB-PWM patterns online to then be fed to MP$^3$C switching time modification mechanism.

In addition to control flux, MP$^3$C has also been adapted to control currents of a single converter system (see EP 3 320 609 A1), and to control currents of a static synchronous compensator based on a modular multilevel converter (see EP 3 142 236 A1).

WO 2019/137916 A1 describes model predictive control based on pulse width modulated switching patterns, which are determined online.

DESCRIPTION OF THE INVENTION

When working with a dual converter system or more general a multi-converter system, in which every converter is controlled with OPPs, it may be necessary to account for the coupling between the two or more converter line currents, both when computing the reference current trajectories and when deciding on the desired manipulation of the switching instances of the multiple OPPs.

It is an objective of the invention to provide a fast and reliable model predictive control method for multi-converter systems.

This objective is achieved by the subject-matter of the independent claims. Further exemplary embodiments are evident from the dependent claims and the following description.

A first aspect of the invention relates to a method for controlling an electrical converter system with at least two electrical converters. The at least two electrical converters may be connected in series and/or in parallel. They may be connected to an electrical grid and/or to an electrical machine. The electrical converters may be low or medium-voltage converters adapted for processing voltages up to 1 kV or more. The method may be performed automatically by a controller of the electrical converter system.

According to an embodiment of the invention, the method comprises: determining a pulse pattern for each electrical converter from a reference converter voltage of the respective converter, wherein each pulse pattern comprises switching times and switching transitions for the respective electrical converter. An outer control loop may provide the reference voltage for each electrical converter, which for example may be determined based on a reference torque, when connected to an electrical machine, and active and reactive power references, when connected to an electrical grid. The pulse pattern may comprise a sequence of switching times, which may be provided as switching angle, and switching transitions, which may indicate at which level the output voltage should be switched. It may be that the pulse patterns of different electrical converters are different. The pulse patterns determined in this step may be seen as nominal pulse patterns, which will be modified later into modified pulse pattern.

According to an embodiment of the invention, the method comprises: determining a sum current reference and at least one difference current reference produced by the pulse pattern. In particular, for N electrical converters, N-1 difference current reference may be determined. From the pulse pattern of each electrical converter, a ripple current reference may be determined from the steady-state trajectory of the ripple current, either by direct calculation or from a look-up table. The current reference may be the superposition of a fundamental current reference and the ripple current reference. The sum current reference may be the sum of these current references and a difference current reference may be the difference of two such current references.

In particular, the effect that each of the nominal pulse patterns applied to the electrical converter system has on the converter output currents is estimated. The ripple current references may be determined from a dynamic system model. This system model may include a grid impedance estimation, and may incorporate a compensation for the rotation of the electrical converters' voltage vectors with respect to each other due to transformer configuration. Such phase-shifts and rotations may be caused by one electrical converter connected to a star-connected winding and another electrical converter connected to a delta-connected winding of a transformer. The ripple current references are transformed to sum and difference current ripple references. The sum and difference current references may be obtained by superimposing ripple current references on respective sum and difference fundamental current references.

According to an embodiment of the invention, the method comprises: determining a measured sum current and at least one measured difference current from measurements in the electrical converter system. In the converter system, also the output currents of the electrical converters may be measured directly or estimated from other measurements. The measured sum current may be the sum of these currents. A measured difference current may be the difference of two such measured output currents.

According to an embodiment of the invention, the method comprises: determining a sum current error and at least one difference current error, wherein the sum current error is determined by subtracting the measured sum current from the sum current reference, and a difference current error is determined by subtracting the respective measured difference current from the difference current reference. The instantaneous sum and difference current errors are determined by subtracting the sum and difference current measurements from the current references.

According to an embodiment of the invention, the method comprises: determining a sum flux modification by multiplying a gain, such as sum-model inductance, to the sum current error and at least one difference flux modification by multiplying a gain, such as difference-model inductance, to the respective difference current error. The sum and difference current errors are converted into sum and difference flux modifications. This step involves multiplying the two current errors with some gain terms, such as the sum inductance and the difference inductances. The method may determine the optimal and unique set of gain terms, i.e. the sum inductance and the difference inductances, to be used based on the model parameters.

According to an embodiment of the invention, the method comprises: mapping the sum flux modification and the at least one difference flux modification to a converter flux modification for each electrical converter. For example, in the case of a three-phase system, the sum and difference flux modifications are mapped to three-phase flux modifications for each electrical converter. This mapping may consider an appropriate rotation matrix to compensate for the configuration of the converter system. For example, the electrical converter connected to a delta-connected transformer on the secondary side will have its voltage vector rotated 30 degrees on the primary side.

According to an embodiment of the invention, the method comprises: modifying the pulse pattern for each electrical converter by moving the switching times, such that the converter flux modification is compensated by the modified pulse pattern with the moved switching times. The nominal pulse patterns of each electrical converter are modified by time-shifting switching instants and/or switching times. The converter flux modification, such as a three-phase flux modifications, of each electrical converter is provided to a model predictive control method, such as described in US 8 766 570 B2 or EP 2 469 692 A1, which is incorporated by reference.

Such a model predictive method may rely on a prediction model, a cost function, an optimization stage and a receding horizon policy. In general, a sequence of future control inputs, here the moved switching times, is computed over a prediction horizon such that a cost function is minimized by solving an optimization problem. It may be that out of the sequence of control inputs, only the first element at the current time step is applied to the electrical converter system. At the next time step, new measurements and/or estimates are obtained, and a revised sequence of future control inputs is computed over a prediction horizon that is shifted by one time step. This gives rise to the receding horizon policy.

The winding flux vector is controlled along a winding flux reference trajectory using fast closed-loop control by modifying the switching times of the pulse patterns within a prediction horizon. The switching times may be moved in time, such that for each electrical converter, the difference of the flux generated by the modified pulse pattern and the flux generated by the nominal pulse pattern at the end of the prediction horizon is equal to the converter flux modification.

According to an embodiment of the invention, the method comprises: applying the modified pulse patterns to the electrical converters. For each electrical converter, at least some of the switching transitions of the modified pulse pattern are applied at the moved switching times to semiconductor switches of the electrical converter.

The method may be applied to single-phase, three-phase and multi-phase electrical converter systems. The electrical converters may have a shared DC link or separate DC links. The electrical converters may be two-level, three-level, and in general multilevel converters. An electrical converter may comprise controllable semiconductor switches, such as transistors and thyristors, which are configured to convert a first AC or DC voltage into a second AC or DC voltage, which may have two levels, three levels or more.

With the method, multiple current errors for a multi-converter system may be controlled with general pulse patterns by using a fast closed-loop switching time modification mechanism, with the MP$^3$C method, such as described in US 8 766 570 B2 or EP 2 469 692 A1. With the method, the steady-state reference trajectories of harmonic currents in the multi-converter system may be computed, and the measured current errors are converted with respect to the references in an optimal way to unique flux modifications for each individual electrical converter.

The method does not require a linear PI control loop, or anti-windup schemes. As opposed to the case of linear controllers, it also does not require filtering of the current measurements for the different electrical converters. Moreover, it does not separate fundamental and harmonic content of the measured currents.

According to an embodiment of the invention, the reference converter voltage for each electrical converter is determined from a sum converter reference and at least one difference converter reference. The sum converter reference may be or may comprise a sum reference current and/or a sum reference voltage. A difference converter reference may be or may comprise a difference reference current and/or a difference reference voltage. The sum converter reference and the at least one difference converter reference may be provided by outer control loops, for example, DC link controllers, voltage controllers and/or other active and reactive power reference generators.

According to an embodiment of the invention, the method further comprises: determining a positive phase sequence reference and a negative phase sequence reference for the sum converter reference and the at least one difference converter reference. In general, a set of three unbalanced phasors can be decomposed into symmetrical components, which are a positive phase sequence, a negative phase sequence and a zero phase sequence that sum up to the three unbalanced phasors. In the present case, the sum converter reference and the at least one difference converter reference may be decomposed in such a way.

According to an embodiment of the invention, the reference converter voltage for each electrical converter is determined from the positive phase sequence reference and the negative phase sequence reference. In such a way, the pulse pattern for an electrical converter may be determined based on positive and negative phase sequence components of the sum and difference fundamental voltage references for the electrical converter. The fundamental voltage references may be calculated from the steady-state system equations as a function of the PCC (point of common coupling) voltage, and the positive and negative phase sequence components of the sum and difference fundamental current references, which may be provided by an outer control loop.

According to an embodiment of the invention, the positive phase sequence reference comprises a sum reference current, at least one difference reference current, a sum reference converter voltage and at least one difference reference converter voltage. The references for the positive phase sequence dq-currents may be determined by an outer control loop, for example, DC link controllers, voltage controllers and/or other active and reactive power reference generators. The positive phase sequence sum and the at least one difference reference converter voltage may be determined from the positive phase sequence sum reference current and the at least one positive phase sequence difference reference current.

According to an embodiment of the invention, the negative phase sequence reference comprises a sum reference current and a sum reference converter voltage. The reference for the negative phase sequence sum current may be determined by an outer control loop, for example an asymmetric fault-triggered negative phase sequence dq-current injector. The negative phase sequence reference converter voltage may be determined from the negative phase sequence sum reference current.

According to an embodiment of the invention, the pulse pattern is an optimized pulse pattern, which is stored in a look-up table with respect to a modulation index. All pulse patterns may have been computed offline with respect to a specific optimization goal, such as low harmonic distortion, and may be stored in a controller, which executes the method. In particular, the switching angles (i.e., switching times) and switching transitions may be stored in the look-up table.

In this case, the modulation index for each electrical converter is determined from the respective converter voltage and/or the possibly low-pass filtered dc-link voltage and the optimized pulse pattern is loaded from the look-up table based on the modulation index.

The phase with respect to a rotating frame (the dq frame) for each electrical converter also may determine from the respective converter voltage and/or the possibly low-pass filtered dc-link voltage.

Also, the optimal steady-state converter line current trajectories, which are used in the model predictive control method, may be stored in the look-up table together with the corresponding optimized pulse pattern.

In the case of optimized pulse patterns, the MP$^3$C method is extended to control currents of a converter system with more than one electrical converter. To this end, reference sum and difference current trajectories are computed based on outer control loops and also the OPPs selected by these outer control loops. The current errors measured with respect to these quantities are converted into flux correction terms to be assigned to each electrical converter. These flux correction terms are used by the MP$^3$C method to adjust the switching times. In multi-converter systems, this extension may ensure that there is no coupling between the electrical converters due to current references and/or switching time modifications is correctly taken into account. The fast transient responses of MP$^3$C may be achieved, while preserving the spectrum of the optimized pulse patterns, when compared to conventional linear control schemes.

According to an embodiment of the invention, a ripple current trajectory is stored in a look-up table for each pulse pattern. In the look-up table, a current ripple trajectory that contains higher order current harmonics for the pulse pattern may be stored. The steady-state trajectory of each electrical converter may be composed of a fundamental component and higher order harmonics. The steady-state trajectory is the trajectory of the system states in steady-state conditions, given an applied pulse pattern. The higher order harmonics, which are generated by an optimized pulse pattern, may be precomputed offline and may be stored in the look-up table together with the corresponding optimized pulse pattern. The higher order harmonics then may be added to the fundamental component.

According to an embodiment of the invention, the sum current reference and the at least one difference current reference are determined from the ripple current trajectories of the electrical converters and in particular are determined from the steady-state trajectories of the electrical converters. Values from the steady-state trajectories at a given time, i.e. at converter reference angles of the electrical converters are determined, and from these values, the sum current reference and the at least one difference current reference are calculated. The converter reference angles are calculated as the sum of the phases of the electrical converters with the PCC voltage angle. The phases of the electrical converter may be determined from the sum and difference reference converter voltages.

According to an embodiment of the invention, the pulse pattern is determined online during operation of the electrical converter system. For example, the pulse pattern is determined with carrier-based pulse width modulation or space vector modulation. The sequence of switching times and switching transitions of the pulse pattern may be determined online by simulating pulse width modulation with a mathematical method. A carrier-based pulse pattern may be generated online for each electrical converter. For example, WO 2019/137916 A1, which is incorporated by reference, describes the online computation of switching commands based on pulse width modulation.

According to an embodiment of the invention, a different transformer configuration between the electrical converters is compensated by rotating at least one converter flux modification. Such a rotation may be done by rotating the respective quantity in the complex plane, or by using a rotation matrix in the state space. When mapping the voltage references to the individual electrical converters, the method also may compensate a phase-shift. A rotation of the quantities of the converters with respect to each other in the state space may be caused by one electrical converter connected to a star-connected winding of a transformer and another electrical converter connected to a delta-connected winding of the transformer.

According to an embodiment of the invention, the converter flux modification for each electrical converter is scaled with a DC link voltage of the electrical converter. Each electrical converter may comprise an individual DC link. To take the effect of different DC link voltages into account, the converter flux modifications are scaled.

According to an embodiment of the invention, the at least two electrical converters are connected in parallel. For example, at least two electrical converters are connected to secondary windings of a transformer, which is connected with a primary winding to an electrical grid. As a further example, the at least two electrical converters are connected to windings of an electrical machine. The electrical machine may be a generator, for example the generator of a wind turbine. The method addresses multi-converter systems connected either to an electrical grid or to an electrical machine. In general, the method may be applied either on the electrical grid, or on the electrical machine with the presence of another governing controller. The method may be also applied both on the electrical grid and on the electrical machine simultaneously.

According to an embodiment of the invention, the at least two electrical converters are connected in series. One electrical converter may be connected with its input to the output of a further electrical converter. In this case, the difference currents may be zero, but other quantities, for example difference voltages and/or difference flux modifications may be different from zero.

Further aspects of the invention relate to a computer program for controlling an electrical converter system, which, when being executed by a processor, is adapted to carry out the steps of the method as described herein, and to a computer-readable medium, in which such a computer program is stored. The method may be executed as software in one or more processors.

A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. In general, the computer-readable medium may be a non-transitory or transitory medium.

A further aspect of the invention relates to a controller for controlling an electrical converter system. The controller is adapted for performing the method as described herein. The controller may comprise one or more processors, in which the method is run as software. It also may be that the method is at least partially or completely implemented in hardware, such as a DSP or FPGA.

A further aspect of the invention relates to an electrical converter system, which is controlled such as described herein.

According to an embodiment of the invention, the electrical converter comprises at least two electrical converters connected in parallel and/or in series; and a controller as described herein.

In general, it has to be understood that features of the method as described in the above and in the following may be features of the computer program, the computer-readable medium, the controller and the electrical converter as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a circuit diagram of a converter system according to an embodiment of the invention.

Fig. 2 schematically shows a circuit diagram of an electrical converter.

Fig. 3 shows an equivalent circuit diagram of a transformer.

Fig. 4 shows a block diagram of a controller according to an embodiment of the invention and illustrating a method according to an embodiment of the invention.

Fig. 5, 6, 7 and 8 show block diagrams of blocks of Fig. 4.

Fig. 9 and 10 show block diagrams of blocks of Fig. 8.

Fig. 11 and 12 show equivalent circuit diagrams for a converter system according to an embodiment of the invention.

Fig. 13 shows an equivalent circuit diagram of an electrical machine.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

**Converter system**

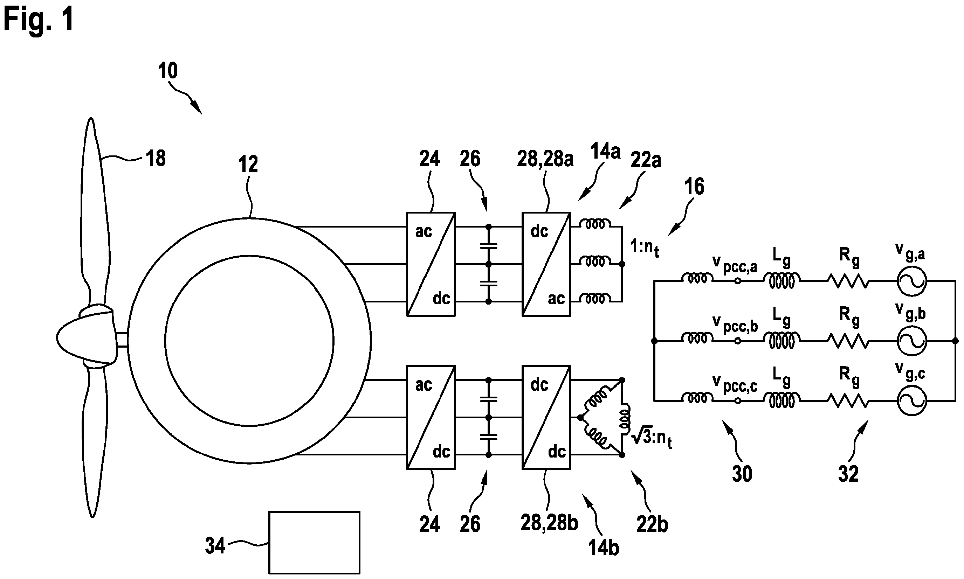

Fig. 1 schematically shows a converter system 10, which may be a wind energy conversion system, e.g., a gearless wind energy conversion system. The converter system 10 comprises a rotating electrical machine 12, which is connected via two or more converter branches 14a, 14b to a transformer 16.

The rotating electrical machine 12 may be a generator, e.g., a synchronous generator, or a motor. In the following it is assumed that the rotating electrical machine 12 is a synchronous generator without loss of generality. The rotating electrical machine 12 may be connected with a wind turbine 18.

The rotating electrical machine 12 may have two or more independent winding systems, which are connected with one of the converter branches 14a, 14b. The transformer 16 has two or more secondary windings 22a, 22b, which are supplied by the converter branches 14a, 14b. The secondary winding 22a may be star-connected. The secondary winding 22b may be delta-connected.

Each converter branch 14a, 14b may be composed of a rectifier 24, a DC-link 26 and an inverter 28. Both the rectifier 24 and the inverter 28 may be two-level or, as depicted here, three-level converters or they may have even more voltage levels. The rectifier 24 and the inverter 28 may be back-to-back converters and/or 3LNPC (Three-Level Neutral Point Clamped) converters. The machine-side rectifier 24 converts the AC voltage of the respective winding system into a DC voltage supplied to the DC-links 26 and to the grid-side inverter 28. The inverter 28 converts the DC voltage into an AC output voltage, which is supplied to the respective secondary winding 22a, 22b of the transformer 16.

The transformer 16 further comprises a primary winding 30, which is connected to an electrical grid 32. The transformer 16 may be a wye/delta-wye transformer.

The electrical converter system 10 and the rectifiers 24 and inverters 28 are controlled by a controller 34. The controller 34 may comprise a processor and a computer-readable medium. The computer-readable medium may store a computer program for performing the control method as described herein. Alternatively or additionally, the controller 34 may comprise a circuitry, e.g. an FPGA, ASIC and/or DSP, which is configured for performing the control method. The controller 34 may be configured for modulating and/or switching the rectifiers 24 and the inverters 28. In particular, the rectifiers 24 and/or the inverters 28 may be switched with OPPs.

In the following, a control method, which may be executed by the controller 34, will be described for the inverters 28 or more general for the electrical converters 28, which are connected to the transformer 16. Therefore, these parts of the converter system 10 have been emphasized in Fig. 1. However, more general, the control method also may be applied to the rectifiers 24 as electrical converters connected to the winding systems of the electrical machine 12. In both these cases, the electrical converters 28 (or 24) are connected in parallel at their AC outputs. In the case of two converters 28 (or 24), the converter system 10 may be denoted dual converter system.

Even more general, the control method also may be applied to more than two electrical converters 28 (or 24) connected in parallel or to electrical converters connected in series via their outputs.

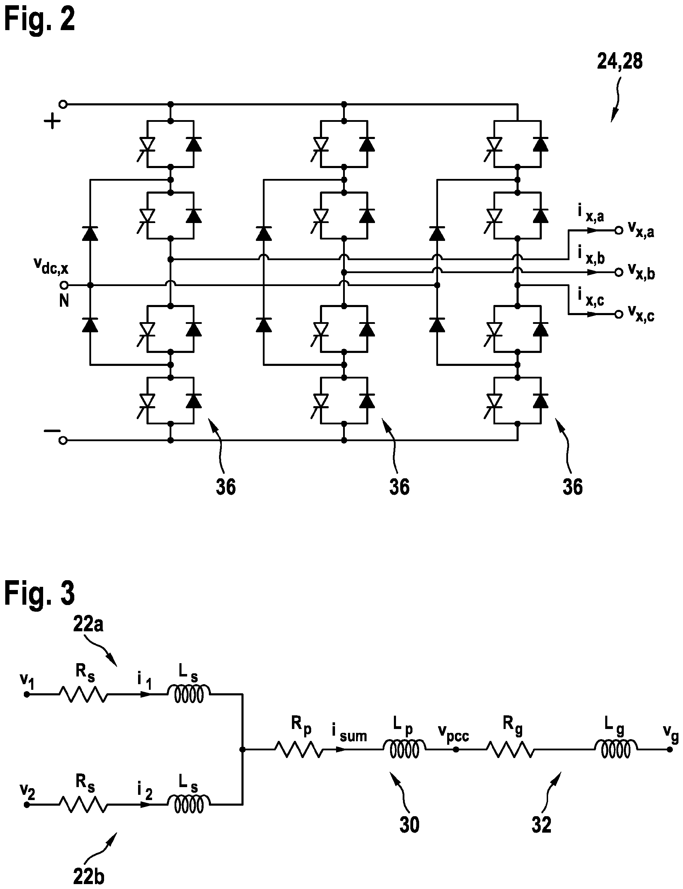

Fig. 2 shows an example of a three-level three-phase NPC (neutral point clamped) electrical converter 24, 28, which may be controlled by the method, as described herein. The electrical converter 24, 28 comprises an NPC half-bridge 36 for each phase.

Each electrical converter 24, 28 has a total dc-link voltage of $v_{dc,x}$. In the following, an electrical converter is denoted with $x \in \{1,2\}$. Returning to Fig. 1, the secondary winding 22a connected to the first converter 28a (x = 1) is connected in a wye configuration, whereas the secondary winding 22b connected to the second converter 28b (x = 2) is connected in a delta configuration. The primary side 30 of the transformer, which is connected to the grid 32 (more precisely, at the point of common coupling), is connected in a wye configuration. This overall configuration implies that the modulating signal of converter 28b is phase-shifted by 30° with respect to that of converter 28a.

It is assumed that the voltages of the top and bottom dc-link capacitors are equal, thus evenly dividing the total

$$v_{top,x} = v_{bot,x} = \frac{v_{dc,x}}{2}$$

dc-link voltage, i.e., . Each phase arm of an NPC converter 28a, 28b can synthesize three voltage levels with respect to the neutral point N, which can be described as

$$v_{x,p} = \frac{v_{dc,x}}{2} u_{x,p},$$

where $p \in \{a,b,c\}$ is a particular phase, and $u_{x,p} \in \{-1,0,1\}$ is the so-called *switch position* of phase $p$. With $v_{x,abc} = [v_{x,a} v_{x,b} v_{x,c}]^T$ and $u_{x,abc} = [u_{x,a} u_{x,b} u_{x,c}]^T$ as the three-phase (converter output) voltage and the three-phase switch position, respectively, it follows that

$$\boldsymbol{v}_{x,abc} = \frac{v_{dc,x}}{2} \boldsymbol{u}_{x,abc}.$$

The voltage at the point of common coupling (with respect to the star-point of the primary winding 30), denoted by $v_{pcc,abc} = [v_{pcc,a} v_{pcc,b} v_{pcc,c}]^T$, is simply referred to as the PCC voltage.

As shown in Fig. 3, the grid 32 is modelled as an inductance $L_g$ and resistance $R_g$ in series with a stiff purely sinusoidal voltage source (i.e. an infinite bus) $v_{g,abc} = [v_{g,a} v_{g,b} v_{g,c}]^T$. Grid parameters and grid voltage source are unknown quantities, however, the former could potentially be available via a grid impedance estimation scheme in a slower time-scale.

**Reference Frames**

The standard three-phase *abc* frame is indicated as $\xi_{abc} = [\xi_a \xi_b \xi_c]^T$. Note that *abc* quantities are always indicated by their subscript. The stationary (orthogonal) reference frame, also known as the $\alpha\beta$-reference frame, is denoted by $\xi_{\alpha\beta} = [\xi_\alpha \xi_\beta]^T$, and

$$\xi_{\alpha\beta} = K\xi_{abc},$$

where the Clarke transformation matrix is defined as

$$K = \frac{2}{3}\begin{bmatrix} 1 & -\frac{1}{2} & -\frac{1}{2} \\ 0 & \frac{\sqrt{3}}{2} & -\frac{\sqrt{3}}{2} \end{bmatrix}.$$

Similarly, the inverse transformation is defined as

$$\xi_{abc} = K^{-1}\xi_{\alpha\beta},$$

where the (pseudo) inverse of K is

$$K^{-1} = \frac{3}{2}K^T.$$

Whenever the subscript is dropped from a quantity, $\alpha\beta$-reference frame is to be assumed, f = $\xi_{\alpha\beta}$.
The (synchronous) rotating (orthogonal) reference frame, also known as the dq-reference frame, is denoted by $\xi_{dq} = [\xi_d \xi_q]^T$, and

$$\xi_{dq} = P(\phi_{pcc})\xi_{abc},$$

where the Park transformation matrix is defined as

$$P(\phi_{pcc}) = \frac{2}{3}\begin{bmatrix} \cos(\phi_{pcc}) & \cos(\phi_{pcc} - \frac{2\pi}{3}) & \cos(\phi_{pcc} + \frac{2\pi}{3}) \\ -\sin(\phi_{pcc}) & -\sin(\phi_{pcc} - \frac{2\pi}{3}) & -\sin(\phi_{pcc} + \frac{2\pi}{3}) \end{bmatrix}.$$

The d-axis of the rotating reference frame is aligned (i.e., synchronized) with the PCC voltage. Thus, the angle that the d-axis makes with the $\alpha$-axis is given by $\phi_{pcc} = \omega_1 t$, where $\omega_1$ is the fundamental (angular) frequency of the grid. Typically, $\phi_{pcc}$ is obtained from a synchronous-reference frame phase-locked loop (PLL). The inverse transformation follows as

$$\xi_{abc} = P^{-1}(\phi_{pcc})\xi_{dq},$$

where the (pseudo) inverse of $P(\phi p_{pcc})$ is

$$P^{-1}(\phi_{pcc}) = \frac{3}{2} P^{T}(\phi_{pcc}).$$

With

$$R(\phi) = \begin{bmatrix} \cos(\phi) & \sin(\phi) \\ -\sin(\phi) & \cos(\phi) \end{bmatrix}$$

as the clockwise rotation matrix, we have

$$\xi_{dq} = R(\phi_{pcc})\xi_{\alpha\beta}.$$

**Mathematical Model of Dual Converter System**

Fig. 3 presents the transformer equivalent circuit of the dual converter system 10 in the $\alpha\beta$-reference frame. The output voltages of the converters 28a, 28b, denoted by $v_1 = [v_{1,\alpha} v_{1,\beta}]^T$ and $v_2 = [v_{2,\alpha} v_{2,\beta}]^T$, are described as

$$v_1(t) = \frac{v_{dc,1}}{2} K u_{1,abc}(t)$$

$$v_2(t) = \frac{v_{dc,2}}{2} D K u_{2,abc}(t),$$

where

$$D = R\left(\frac{\pi}{6}\right)$$

applies a 30° (clockwise) rotation due to the delta configuration of converter 28b. The transformer 16 is represented by its primary and secondary leakage inductances ($L_p$ and $L_s$) and also the respective resistances ($R_p$ and $R_s$). The line currents of converters 28a, 28b are denoted by $i_1$ and $i_2$, respectively.

From Fig. 3, a dynamical model based on only the known quantities can be derived

$$\frac{d}{dt}\begin{bmatrix} i_1(t) \\ i_2(t) \end{bmatrix} = F \begin{bmatrix} i_1(t) \\ i_2(t) \end{bmatrix} + G_1 v_1(t) + G_2 v_2(t) + T v_{pcc}(t), \tag{1}$$

where $L_t = 2L_p + L_s$ and $R_t = 2R_p + R_s$, and the state-space matrices are defined as

$$F = F(R_t, L_t) = -\begin{bmatrix} \left(\frac{R_t}{2L_t} + \frac{R_s}{2L_s}\right)I_2 & \left(\frac{R_t}{2L_t} - \frac{R_s}{2L_s}\right)I_2 \\ \left(\frac{R_t}{2L_t} - \frac{R_s}{2L_s}\right)I_2 & \left(\frac{R_t}{2L_t} + \frac{R_s}{2L_s}\right)I_2 \end{bmatrix}, G_1 = G_1(L_t) = \begin{bmatrix} \left(\frac{1}{2L_t} + \frac{1}{2L_s}\right)I_2 \\ \left(\frac{1}{2L_t} - \frac{1}{2L_s}\right)I_2 \end{bmatrix},$$

$$G_2 = G_2(L_t) = \begin{bmatrix} (\frac{1}{2L_t} - \frac{1}{2L_s})I_2 \\ (\frac{1}{2L_t} + \frac{1}{2L_s})I_2 \end{bmatrix} D, \; and \; T = T(L_t) = -\frac{1}{L_t}\begin{bmatrix} I_2 \\ I_2 \end{bmatrix}.$$

If the grid voltage and the grid impedance were known, the dynamics in (1) would hold also after replacing $v_{pcc}$ with $v_g$, and ($R_t$, $L_t$) pair with ($\tilde{R}_t = R_t + 2R_g$, $\tilde{L}_t = L_t + 2L_g$) pair. Such grid estimation-based dynamics will also be referred to as equation (1) in the remainder.

The currents of the two converter branches 14a, 14b are coupled by all the state-space matrices in (1). Controlling this dynamical system with two separate current controllers without taking the coupling into account accurately may lead to adverse effects such as unequal loading of converter branches 14a, 14b and increased oscillatory behaviour during transients. This follows since any modification to $v_1$ (or equivalently $u_{1,abc}$) not only changes $i_1$ but also $i_2$.

A further representation is used with a conversion to a sum and difference model. With $\xi_1$ and $\xi_2$ as the quantities of converter 28a, 28b (x=1,2), respectively, the sum model is defined as

$$\xi_{sum} = \xi_1 + \xi_2, \tag{2}$$

whereas the difference model is defined as

$$\xi_{diff} = \xi_1 - \xi_2. \tag{3}$$

Clearly, $\xi_1 = \frac{1}{2}\left(\xi_{sum} + \xi_{diff}\right)$ and $\xi_2 = \frac{1}{2}\left(\xi_{sum} - \xi_{diff}\right)$. Applying (2) and (3) to the differential equations of (1) results in

$$\frac{di_{sum}(t)}{dt} = -\frac{R_t}{L_t} i_{sum}(t) + \frac{1}{L_t} v_{sum}(t) - \frac{2}{L_t} v_{pcc}(t)$$

$$\frac{di_{diff}(t)}{dt} = -\frac{R_s}{L_s} i_{diff}(t) + \frac{1}{L_s} v_{diff}(t), \tag{4}$$

where $i_{sum} = i_1 + i_2$, $i_{diff} = i_1 - i_2$, $v_{sum} = v_1 + v_2$, and $v_{diff} = v_1 - v_2$ are the sum current, difference current, sum voltage, and difference voltage, respectively. The sum current is equal to the grid current, $i_{sum} = i_g$. Again, $v_{pcc}$ can be replaced with $v_g$ in the dynamics above, whenever ($R_t$, $L_t$) pair is also replaced with ($\tilde{R}_t$, $\tilde{L}_t$) pair. Equation (4) can also be described in the dq-frame as

$$\frac{di_{sum,dq}(t)}{dt} = -\frac{R_t}{L_t} i_{sum,dq}(t) - \omega_1 \begin{bmatrix} 0 & -1 \\ 1 & 0 \end{bmatrix} i_{sum,dq}(t) + \frac{1}{L_t} v_{sum,dq}(t) - \frac{2}{L_t} v_{pcc,dq}(t)$$

$$\frac{di_{diff,dq}(t)}{dt} = -\frac{R_s}{L_s} i_{diff,dq}(t) - \omega_1 \begin{bmatrix} 0 & -1 \\ 1 & 0 \end{bmatrix} i_{diff,dq}(t) + \frac{1}{L_s} v_{diff,dq}(t). \tag{5}$$

## Control Objectives

The control objectives for the dual converter system 10 are to

1. produce deterministic voltage and current spectrums according to two pre-computed OPPs during steady-state operation when connected to a symmetric grid with no faults present,
2. closely follow arbitrary current references, which for instance may relate to positive and negative phase sequence active and reactive power delivery,

3. safe and reliable operation by maintaining a set of system variables within certain bounds, and

4. achieve a fast current response during dynamic events, such as grid faults.

The harmonic requirements in the first objective must be satisfied with the offline calculated OPPs. During steady-state operation, the controller 34 should only modify the OPPs to reject unmodeled disturbances. Under idealized conditions, the controller 34 should not modify the OPPs at all, thus keeping the superior harmonic performance of OPPs intact. This objective can be achieved by accounting for the coupling between the two converter branches 14a, 14b as it is described in the following.

**Harmonic Current Trajectories**

The fundamental components of the converter current references ( $i^*_{1,1}$ and $i^*_{2,1}$ ) are assumed to be provided by some outer control loops to satisfy power delivery and safe operation requirements. The reference for the ripple (i.e. the higher-order harmonics) components ( $i^*_{1,h}$ and $i^*_{2,h}$ ) are calculated according to the nominal OPPs picked by the outer loops. The control method then superimposes the reference for the ripple on the fundamental components as

$$i^*_1 = i^*_{1,1} + i^*_{1,h}$$

$$i^*_2 = i^*_{2,1} + i^*_{2,h},$$

which is allowed due to the linear system model.

Denote with $i^*_{1,h,traj}$ and $i^*_{2,h,traj}$ as the steady-state trajectory of the ripple. The ripple trajectory is derived based on a dynamical model that may include an estimated grid model. Assume a grid impedance estimation is available to compute $\tilde{L}_t = 2L_g + 2L_p + L_s$ and $\tilde{R}_t = 2R_g + 2R_p + R_s$; otherwise, set $R_g = 0$ and $L_g = 0$. Based on the solution to the system model in (1) with nominal pulse patterns $u^*_{1,abc}$ and $u^*_{2,abc}$ , the ripple current can be calculated as

$$\begin{bmatrix} i^*_{1,h,traj}(t) \\ i^*_{2,h,traj}(t) \end{bmatrix} = e^{F(\tilde{R}_t, \tilde{L}_t)t} \begin{bmatrix} i^*_{1,h,traj}(0) \\ i^*_{2,h,traj}(0) \end{bmatrix}$$

$$+ \int_0^t e^{F(\tilde{R}_t, \tilde{L}_t)(t-\tau)} G_1(\tilde{L}_t) \frac{v_{dc,1}}{2} \left( K u^*_{1,abc}(\tau) - u^*_{1,1}(\tau) \right) d\tau$$

$$+ \int_0^t e^{F(\tilde{R}_t, \tilde{L}_t)(t-\tau)} G_2(\tilde{L}_t) \frac{v_{dc,2}}{2} \left( KD u^*_{2,abc}(\tau) - u^*_{2,1}(\tau) \right) d\tau \qquad (6)$$

where $u^*_{1,1}$ and $u^*_{2,1}$ are the fundamental components of the pulse patterns of converters 28a, 28b (x=1, 2), respectively. Since the grid voltage $v_g$ is assumed to have only a fundamental component, which for a linear system implies that it only affects the fundamental component of the current, it is absent in (6). The steady-state trajectories of $i^*_{1,h,traj}$ and $i^*_{2,h,traj}$ can be computed by integration from (6) for $t \in [0, T_1], T_1 = \frac{2\pi}{\omega_1}$ , by knowing the following boundary condition:

$$\begin{bmatrix} i^*_{1,h,traj}(0) \\ i^*_{2,h,traj}(0) \end{bmatrix} = \begin{bmatrix} i^*_{1,h,traj}(T_1) \\ i^*_{2,h,traj}(T_1) \end{bmatrix},$$

due to periodicity of the trajectories induced by periodic inputs to linear systems.

**Current Errors and Converter Flux Modifications**

Based on an integration of (4), and ignoring resistances, the sum and difference currents can be predicted at the end of a prediction horizon $T_p$ as

$$i_{sum}(T_p) = i_{sum}(0) + \frac{1}{\tilde{L}_t} \int_0^{T_p} v_{sum}(t)dt - \frac{2}{\tilde{L}_t} \int_0^{T_p} v_g(t)dt$$

$$i_{diff}(T_p) = i_{diff}(0) + \frac{1}{L_s} \int_0^{T_p} v_{diff}(t)dt.$$

By adding (averaged) applied voltage modifications $\Delta v_{sum}$ and $\Delta v_{diff}$ over $T_p$ to the sum and difference voltages, respectively, it follows that

$$i_{sum}(T_p) + \Delta i_{sum} = i_{sum}(0) + \frac{1}{\tilde{L}_t} \int_0^{T_p} (v_{sum}(t) + \Delta v_{sum})dt - \frac{2}{\tilde{L}_t} \int_0^{T_p} v_g(t)dt$$

$$i_{diff}(T_p) + \Delta i_{diff} = i_{diff}(0) + \frac{1}{L_t} \int_0^{T_p} (v_{diff}(t) + \Delta v_{diff})dt,$$

from which it follows that

$$\Delta \psi_{sum} = \tilde{L}_t \Delta i_{sum} = \int_0^{T_p} \Delta v_{sum} dt$$

$$\Delta \psi_{diff} = L_s \Delta i_{diff} = \int_0^{T_p} \Delta v_{diff} dt. \tag{7}$$

From the equations in (7), it follows directly that any arbitrary modification to the currents ($\Delta i_{sum}$, $\Delta i_{diff}$) can be achieved by a unique set of total corrections to sum and difference fluxes ($\Delta \psi_{sum}$, $\Delta \psi_{diff}$). These corrections of ($\Delta \psi_{sum}$, $\Delta \psi_{diff}$) can be mapped to each electrical converter 28a, 28b (x=1,2) as

EP 4 304 075 A1

$$\Delta\boldsymbol{\psi}_{1,abc} = \boldsymbol{K}^{-1}\frac{1}{2}(\Delta\boldsymbol{\psi}_{sum} + \Delta\boldsymbol{\psi}_{diff})$$

$$\Delta\boldsymbol{\psi}_{2,abc} = \boldsymbol{K}^{-1}\boldsymbol{D}^{-1}\frac{1}{2}(\Delta\boldsymbol{\psi}_{sum} - \Delta\boldsymbol{\psi}_{diff}). \qquad (8)$$

These equations present a novel method for obtaining desired individual converter flux modifications for a dual converter system 10 by multiplying two current errors with a gain term. The set of gains defined above are derived from the model parameters.

In a final step, the total corrections in converter flux of each converter over $T_p$ needs to be mapped into pulse pattern modifications over the same horizon. This mapping step may be performed for each converter 28a, 28b separately by implementing either a quadratic program or a deadbeat variant. In case of the deadbeat variant, the horizon $T_p$ is lengthened until at least two switching transitions in each phase are considered. These two mapping methods are described in US 8 766 570 B2 or EP 2 469 692 A1, which are incorporated by reference.

Although the converter flux is modified, the converter current is still the quantity that is directly controlled; in other words, no (virtual) converter flux needs to be estimated.

To summarize, it is shown that arbitrary current modifications can be mapped into sum and difference flux corrections via (7). Converter flux corrections can be obtained using (8). Time modifications to pulse patterns of each converter 28a, 28b can be obtained based on the assigned individual converter flux correction, for example using the MP$^3$C method of US 8 766 570 B2 or EP 2 469 692 A1.

**Current-based Model Predictive Control Algorithm for Dual Converter Systems**

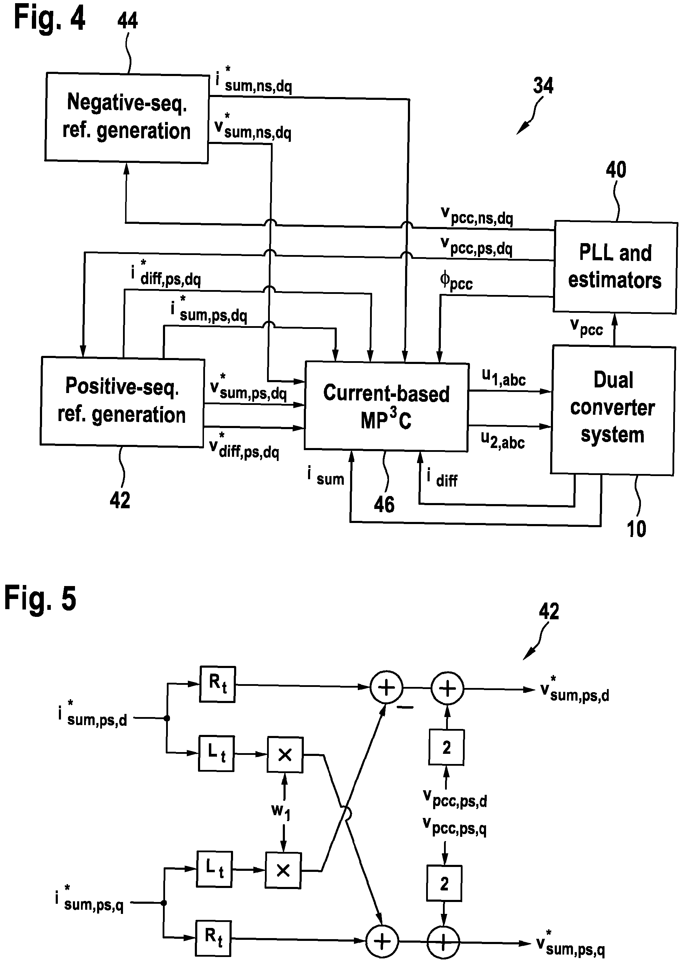

Fig. 4 shows a high-level control diagram of the model predictive control method for the converter system 10. The blocks in the diagram, and also in the following diagrams, may represent modules of the controller 34 or software functions of the control method.

Variables with the subscripts ps and ns refer to the positive and negative phase sequence components, respectively. Variables with a positive phase sequence are transformed to the (synchronous) rotating reference frame via $\xi_{ps,dq} = \boldsymbol{R}(\phi_{pcc})\xi_{ps}$. Negative phase sequences are transformed into a rotating reference frame that rotates in the opposite direction as $\xi_{ns,dq} = \boldsymbol{R}(-\phi_{pcc})\xi_{ns}$. For quantities of interest, such as the PCC voltage, $\xi_{ps}$ and $\xi_{ns}$ can be obtained in $\alpha\beta$-reference frame via positive and negative phase sequence estimators. Negative phase sequences are present during asymmetric operation mode, e.g., asymmetric grid faults.

Block 40 represents a synchronous-reference frame phase-locked loop (PLL) and phase sequence estimator, which receives the three-phase voltage measured at the point of common coupling $v_{pcc}$ and determines therefrom the positive and negative phase sequence components $v_{pcc,ps,dq}$, $v_{pcc,ns,dq}$ of this voltage in the dq reference frame and its angle $\phi_{pcc}$. These quantities are passed to the positive phase sequence reference generation block 42, which is responsible for determining the fundamental component of the positive phase sequence references $i^*_{sum,ps,dq}$, $i^*_{diff,ps,dq}$ and $v^*_{sum,ps,dq}$, $v^*_{diff,ps,dq}$, and to the negative phase sequence reference generation block 44 is responsible for determining the fundamental component of the negative phase sequence references $i^*_{sum,ns,dq}$ and $v^*_{sum,ns,dq}$.

All these quantities are passed to an inner current-based model predictive controller 46, which also receives the angle $\phi_{pcc}$ that the d-axis makes with the $\alpha$-axis, which angle $\phi_{pcc}$ is provided by block 40, and the measured sum and difference current $i_{sum}$, $i_{diff}$. Controller 46 determines the three-phase switch positions $\boldsymbol{u}_{1,abc}$ and $\boldsymbol{u}_{2,abc}$ for the converters 28a, 28b.

The blocks 42, 44, 46 are explained in detail in the following. Time dependency is dropped for convenience.

**Positive Phase Sequence Reference Generation**

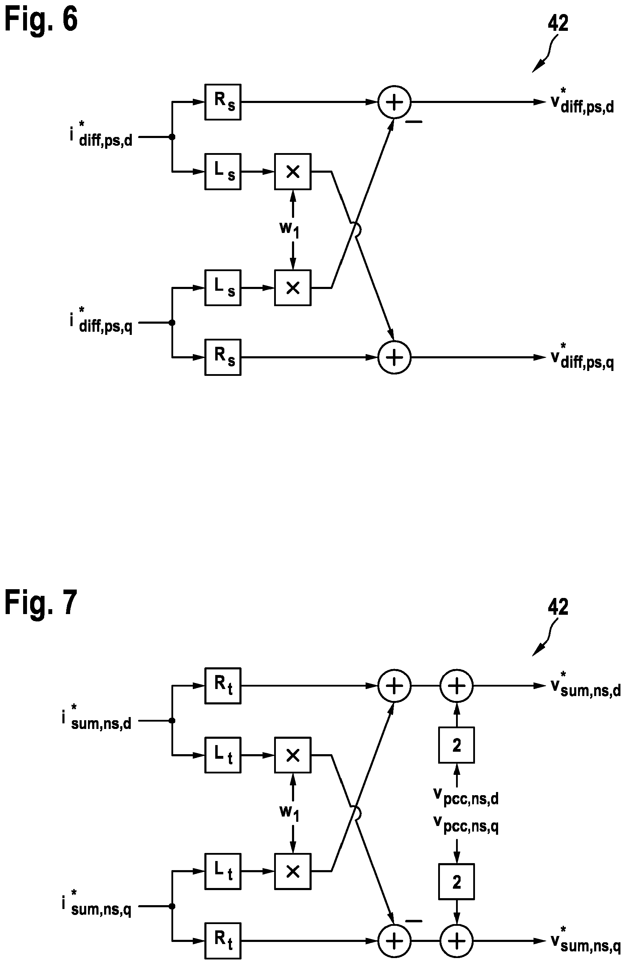

Fig. 5 and 6 show control diagrams of the positive phase sequence reference generation block 42 in more detail.

The references for the positive phase sequence dq-currents $i^*_{sum,ps,dq}$ and $i^*_{diff,ps,dq}$ are calculated by some outer control loop such as DC link controllers, voltage controllers, and other active and reactive power reference generators. Given these quantities, the positive phase sequence reference generation block 42 determines the positive phase sequence sum and difference converter (reference) voltages $v^*_{sum,ps,dq}$ and $v^*_{diff,ps,dq}$. In contrast with the ripple reference trajectory derivations, this block is based on a steady-state equation with respect to the PCC voltage, and ignores the estimated grid impedance model.

Invoking (5), with the steady-state equations (i.e., $\frac{di_{dq}}{dt} = 0$) $v^*_{sum,ps,dq}$ and $v^*_{diff,ps,dq}$ can be calculated,

$$v^*_{sum,ps,d} = R_t i^*_{sum,ps,d} - \omega_1 L_t i^*_{sum,ps,q} + 2v_{pcc,ps,d}$$

$$v^*_{sum,ps,q} = R_t i^*_{sum,ps,q} + \omega_1 L_t i^*_{sum,ps,d} + 2v_{pcc,ps,q}$$

for the sum converter voltage, and

$$v^*_{diff,ps,d} = R_s i^*_{diff,ps,d} - \omega_1 L_s i^*_{diff,ps,q}$$

$$v^*_{diff,ps,q} = R_s i^*_{diff,ps,q} + \omega_1 L_s i^*_{diff,ps,d}$$

for the difference converter voltage.

The variables $i^*_{sum,ps,dq}$, $i^*_{diff,ps,dq}$, $v^*_{sum,ps,dq}$ and $v^*_{diff,ps,dq}$ are passed on to the inner current controller 46.

**Negative Phase Sequence Reference Generation**

Fig. 7 shows a control diagram of the positive phase sequence reference generation block 44 in more detail.

The reference for the negative phase sequence current $i^*_{sum,ns,dq}$ is determined by some outer control loop, e.g., an asymmetric fault-triggered negative phase sequence dq-current injector. Given these quantities, the feedforward controller shown in Fig. 7 determines the negative phase sequence converter voltage reference $v^*_{sum,ns,dq}$. The controller part shown in Fig. 7 is similar to the controller part of the positive phase sequence reference generation block 42 shown in Fig. 5 with the difference of treating variables with negative phase sequences.

It can be shown from (5), that the differential equations that describe the converter in a dq-reference frame with negative phase sequence are

$$v_{sum,dq} = R_t i_{sum,dq} - \omega_1 L_t \begin{bmatrix} 0 & -1 \\ 1 & 0 \end{bmatrix} i_{sum,dq} + L_t \frac{di_{sum,dq}}{dt} + 2v_{pcc,dq}$$

$$v_{diff,dq} = R_s i_{diff,dq} - \omega_1 L_s \begin{bmatrix} 0 & -1 \\ 1 & 0 \end{bmatrix} i_{diff,dq} + L_s \frac{di_{diff,dq}}{dt}. \tag{9}$$

Note that (9) is similar to (5), but with $\omega_1$ replaced by $-\omega_1$; since the reference frame with negative phase sequence is rotating clockwise.

The negative phase sequence reference generation is based on the steady-state version of (9):

$$v^*_{sum,ns,d} = R_t i^*_{sum,ns,d} + \omega_1 L_t i^*_{sum,ns,q} + 2v_{pcc,ns,d}$$

$$v^*_{sum,ns,q} = R_t i^*_{sum,ns,q} - \omega_1 L_t i^*_{sum,ns,d} + 2v_{pcc,ns,q}$$

for the sum converter voltage reference. If required, a difference reference may be added to each axis.

The variables $i^*_{sum,ns,dq}$ and $v^*_{sum,ns,dq}$ are passed on to the inner current controller.

**Inner current-based model predictive controller**

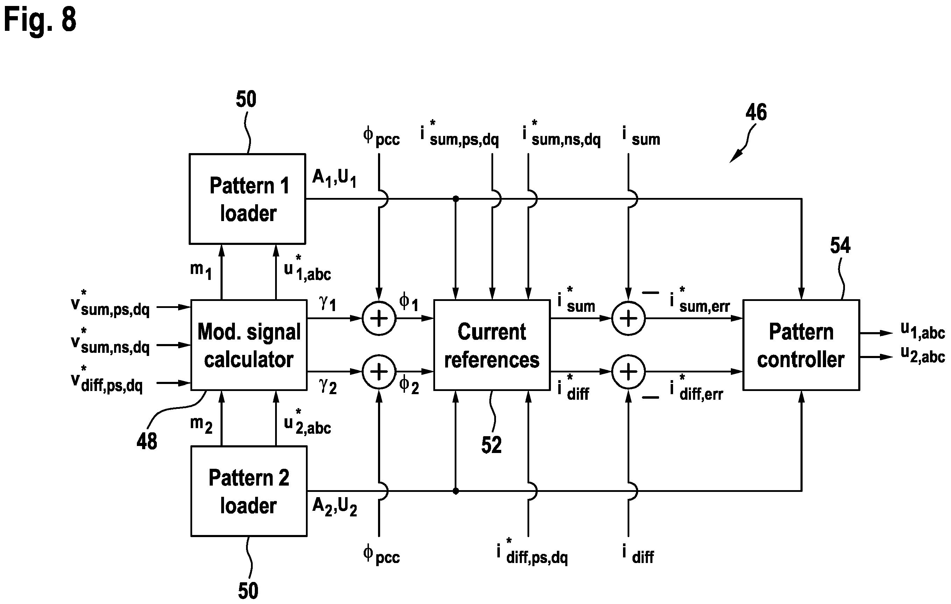

Fig. 8 shows the inner current-based model predictive controller 46 in more detail.

Once the references for the converter voltages $v^*_{sum,ps,dq}$, $v^*_{diff,ps,dq}$, and $v^*_{sum,ns,dq}$ and for the fundamental currents $i^*_{sum,ps,dq}$, $i^*_{diff,ps,dq}$, and $i^*_{sum,ns,dq}$ are determined, they are passed on to the (fast) inner current-based MP³C controller 46.

The inner controller 46 comprises a modulating signal calculator 48, two pattern loaders 50, a current references determination block 52, and a pattern controller 54. The converter reference angles $\phi_1$ and $\phi_2$ are calculated as the sum of the phase $\gamma_1$ and $\gamma_2$, respectively, with the PCC voltage angle $\phi_{pcc}$.

The pulse pattern loaders 50, which are explained below, require a modulation index or a modulating signal, which is determined by the modulating index and modulating signal calculator 48. In a first step, the sum and difference voltages are mapped to converter voltages as

$$v^*_{1,dq} = \frac{1}{2}\left(v^*_{sum,ps,dq} + v^*_{diff,ps,dq}\right) + \frac{1}{2}R(2\phi_{pcc})v^*_{sum,ns,dq}$$

$$v^*_{2,dq} = D^{-1}\left(\frac{1}{2}\left(v^*_{sum,ps,dq} - v^*_{diff,ps,dq}\right) + \frac{1}{2}R(2\phi_{pcc})v^*_{sum,ns,dq}\right). \quad (10)$$

The converter voltages are then scaled with their respective dc-link voltages to calculate the modulation signals,

$$u^*_{x,dq} = \frac{v^*_{x,dq}}{v_{dc,x}/2}. \quad (11)$$

Thereafter, the modulation index and phase (with respect to the dq-frame) are calculated as

$$m_x = \sqrt{\left(u^*_{x,d}\right)^2 + \left(u^*_{x,q}\right)^2} \quad (12)$$

$$\gamma_x = \arctan\left(\frac{u^*_{x,q}}{u^*_{x,d}}\right). \quad (13)$$

The modulating signal in *abc* for each converter is calculated as

$$u^*_{x,abc} = P^{-1}(\phi_{pcc})u^*_{x,dq,} \quad (14)$$

which can also be complemented with the injection of a common-mode component.

Given the modulation indices $m_x$, each pattern loader 50 supplies, for a single phase, the arrays of switching angles $A_x = [\alpha_{x,1}\ \alpha_{x,2}\ ...\ \alpha_{x,d}]$ and switching transitions $U_x = [u_{x,1}\ u_{x,2}\ ...\ u_{x,d}]$, which together form an optimized pulse pattern $(A_x,\ U_x)$. The arrays and/or optimized pulse patterns $(A_x,\ U_x)$ are stored in a look-up table in the controller 34 and/or the pattern loaders 50. The content of the look-up table may have been computed offline.

The optimized pulse pattern $(A_x,\ U_x)$ determined by the pattern loaders 50 is provided to the current references determination block 52 and the pattern controller block 54.

In some cases, it may be preferable to use a carrier-based pulse width modulation method, such as the MP$^3$C method described in WO 2019/137916 A1. This method does not utilize OPPs, instead as an alternative it proposes calculating modulation signals in *abc* to obtain a switching sequence. For example, an application case may be low-voltage fault ride-through. In this case, the pattern loaders 50 may generate a carrier-based pulse-width modulated sequence, for example as described in WO 2019/137916 A1. The modulating signal $u^*_{x,abc}$ may be used to determine the switching sequence over a few modulation cycles. The arrays $A_x$ and $U_x$ are then populated with the switching angles and transitions of the pulse-width modulated signal.

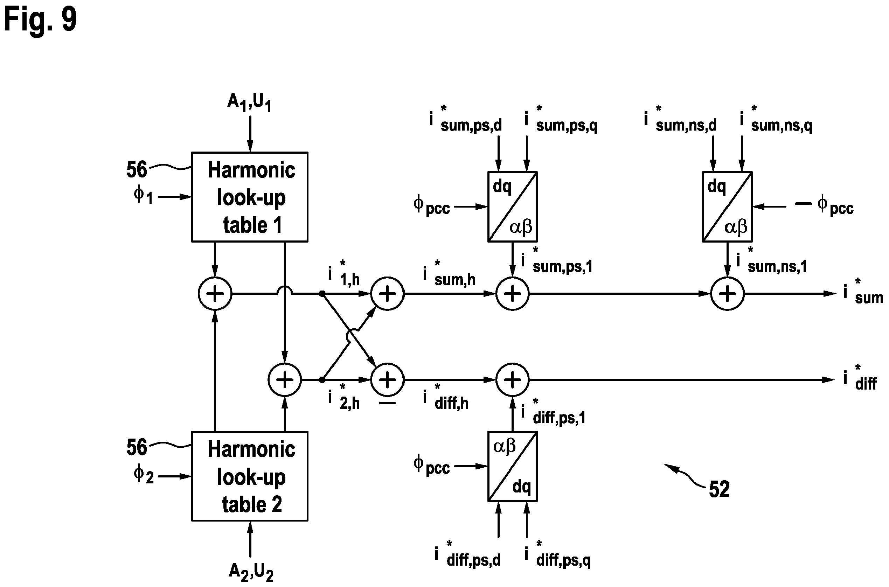

Fig. 9 shows the current references determination block 52 in more detail. Once the appropriate pulse patterns are selected, the sum and difference currents references $i^*_{sum}$ and $i^*_{diff}$ are determined.

As it is explained above, the ripple current references can be determined, and superimposed on the fundamental current references, which is done in block 52. Ripple components, which are calculated offline, are read out from harmonic look-up tables 56. Each harmonic look-up table 56 contains the effect that a converter voltage has on the two converter branch currents. Using superposition property of linear systems, the effect of the converter voltages in (6) can be stored separately, and then added in another step to calculate the ripple/harmonic reference of the line currents $i^*_{1,h}$ and $i^*_{2,h}$. The values of $i^*_{1,h}$ and $i^*_{2,h}$ at the converter reference angles $\phi_1$ and $\phi_2$, respectively, are read from the look-up tables (wherein the steady-state trajectories $i^*_{1,h,traj}$ and $i^*_{2,h,traj}$ are stored). The ripple of the sum and difference currents $i^*_{sum,h}$ and $i^*_{diff,h}$ are then calculated as the sum and difference, respectively, of the converter branch currents. In a final step, the ripple current references are added to the fundamental components to calculate $i^*_{sum}$ and $i^*_{diff}$, which serves as references for the current controller 54.

In the case of a carrier-based method, one may skip reading the ripple reference, and use only the fundamental component reference.

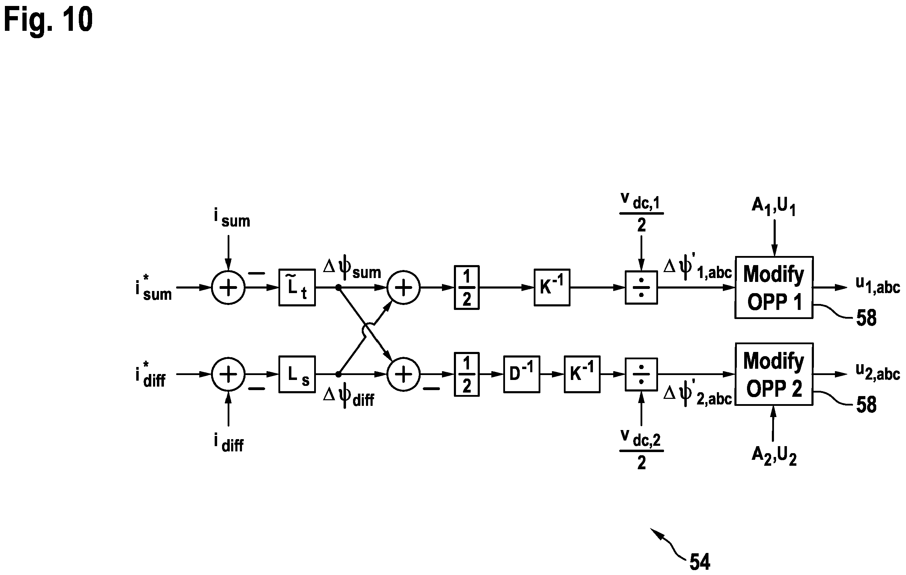

Fig. 10 shows the pulse pattern controller 54 in more detail. The pulse pattern controller 54 modifies the nominal pulse patterns $(A_x,\ U_x)$ provided by the pattern loaders 50, into modified pulse patterns $\mathbf{u}_{1,abc}$ and $\mathbf{u}_{2,abc}$, which are then applied to the converter system 10.

The pulse pattern controller 54 serves as a high-bandwidth current controller that regulates the sum and difference currents $i_{sum}$ and $i_{diff}$ along their (steady-state) references $i^*_{sum}$ and $i^*_{diff}$. The sum and difference current errors are defined as

$$i_{sum,err} = i^*_{sum} - i_{sum}$$

$$i_{diff,err} = i^*_{diff} - i_{diff},$$

respectively.

As explained above, the required sum and difference flux modifications are

$$\Delta\boldsymbol{\psi}_{sum} = \tilde{L}_t \boldsymbol{i}_{sum,err}$$

$$\Delta\boldsymbol{\psi}_{diff} = L_s \boldsymbol{i}_{diff,err}.$$

The sum and difference flux modifications are then mapped to a three-phase flux modification for each converter 28a, 28b as

$$\Delta\boldsymbol{\psi}_{1,abc} = \boldsymbol{K}^{-1}\frac{1}{2}(\Delta\boldsymbol{\psi}_{sum} + \Delta\boldsymbol{\psi}_{diff})$$

$$\Delta\boldsymbol{\psi}_{2,abc} = \boldsymbol{K}^{-1}\boldsymbol{D}^{-1}\frac{1}{2}(\Delta\boldsymbol{\psi}_{sum} - \Delta\boldsymbol{\psi}_{diff}).$$

It is important to note that since the switching times of $\boldsymbol{u}_{2,abc}$ will be modified, the flux corrections has to be multiplied with $\boldsymbol{D}^{-1}$ to consider the effect of the delta configuration of converter 28b. The converter fluxes are then scaled with their respective DC link voltages as

$$\Delta\boldsymbol{\psi}'_{1,abc} = \frac{\Delta\psi_{1,abc}}{v_{dc,1}/2}$$

$$\Delta\boldsymbol{\psi}'_{2,abc} = \frac{\Delta\psi_{2,abc}}{v_{dc,2}/2}.$$

The time modifications required per phase p to achieve the corrections are then obtained in blocks 58, in which the transition times/switching angles $A_x$ are moved to compensate the flux modification $\Delta\psi_{x,abc}$. This may be done with the MP³C method as explained in US 8 766 570 B2 or EP 2 469 692 A1.

The method may apply a receding horizon, i.e., at each sampling instant, corrections to the switching instants are computed, but only the first instance of the optimal control inputs is applied to the converters 28a, 28b, and the process is repeated at the following sampling instant.

In summary, the pattern controller 54 executes the following steps:

1. Compute the current errors as

$$\boldsymbol{i}_{sum,err} = \boldsymbol{i}^*_{sum} - \boldsymbol{i}_{sum}$$

$$\boldsymbol{i}_{diff,err} = \boldsymbol{i}^*_{diff} - \boldsymbol{i}_{diff}$$

2. Convert the current errors into sum and difference flux modifications as

$$\Delta\boldsymbol{\psi}_{sum} = \tilde{L}_t \boldsymbol{i}_{sum,err}$$

$$\Delta\boldsymbol{\psi}_{diff} = L_s \boldsymbol{i}_{diff,err}.$$

3. Map the sum and difference flux modifications to converter flux modifications as

$$\Delta \boldsymbol{\psi}_{1,abc} = \boldsymbol{K}^{-1} \frac{1}{2} (\Delta \boldsymbol{\psi}_{sum} + \Delta \boldsymbol{\psi}_{diff})$$

$$\Delta \boldsymbol{\psi}_{2,abc} = \boldsymbol{K}^{-1} \boldsymbol{D}^{-1} \frac{1}{2} (\Delta \boldsymbol{\psi}_{sum} - \Delta \boldsymbol{\psi}_{diff}).$$

4. Scale the flux modifications of each converter with its respective DC link voltage as

$$\Delta \boldsymbol{\psi}'_{1,abc} = \frac{\Delta \psi_{1,abc}}{v_{dc,1}/2}$$

$$\Delta \boldsymbol{\psi}'_{2,abc} = \frac{\Delta \psi_{2,abc}}{v_{dc,2}/2}.$$

5. Calculate the time modifications in blocks 58, for example according to the method described in US 8 766 570 B2 or EP 2 469 692 A1.

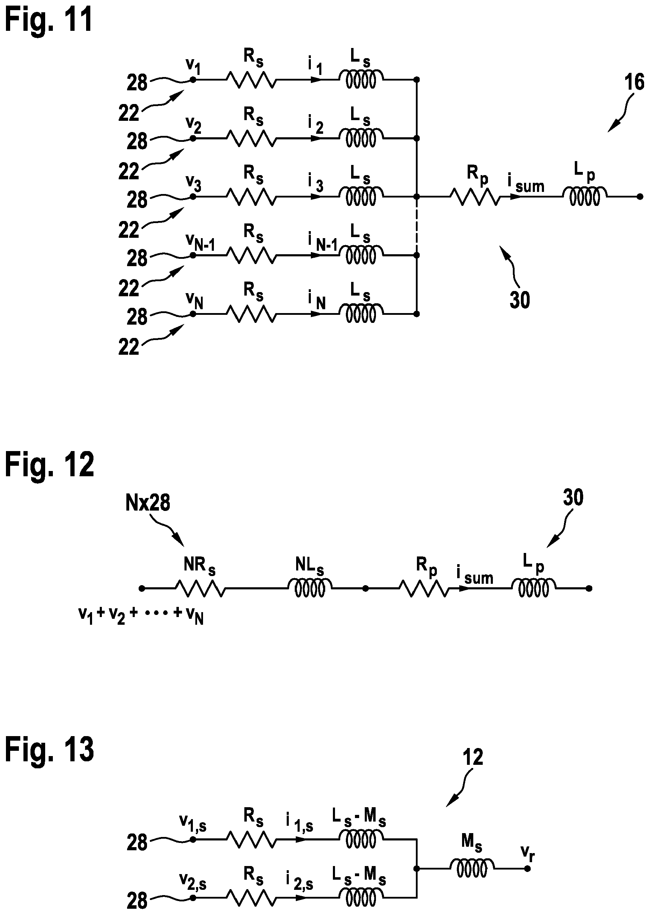

Fig. 11 shows an equivalent circuit of a converter system 10 with more than two electrical converters 28 connected in parallel to a transformer 16. The transformer may have N secondary windings 22 each connected to an electrical converter 28 and one primary winding 30. The method as described above can be generalized to N parallel connected converters 28.

Fig. 12 shows an equivalent circuit of a converter system 10 with at least two electrical converters connected in series to a transformer 16. The method can be generalized to a converter system 10 where N converters are operated in series. As with the parallel case, this is achieved by defining a sum and $N - 1$ difference quantities for the converter quantities. Note that the difference current is zero in the series-connected case, since each converter has the same current. However, other difference quantities may not necessarily be zero (for example the flux modifications assigned to the converters).

Fig. 13 shows an equivalent circuit of a converter system 10 with two electrical converters 28 connected to an electrical machine 12. The method can be generalized to such a converter system 10 by simply replacing the linear system model above with that of the winding system of the electrical machine 12. Note that the similarity to Fig. 3; $L_s$ is replaced by $L_s - M_s$, $L_p$ is replaced by $M_s$, and $R_p = 0$.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1.  A method for controlling an electrical converter system (10) with at least two electrical converters (28a, 28b), the method comprising:

    determining a pulse pattern ($A_1$, $U_1$; $A_2$, $U_2$) for each electrical converter (28a, 28b) from a reference converter

    voltage $(v^*_{1,dq}, v^*_{2,dq})$ of the respective converter (28a, 28b), wherein each pulse pattern ($A_1$, $U_1$; $A_2$, $U_2$) comprising switching times ($A_1$; $A_2$) and switching transitions ($U_1$; $U_2$) for the respective electrical converter (28a, 28b);

determining a sum current reference $(i^*_{sum})$ and at least one difference current reference $(i^*_{diff})$ produced by the pulse pattern ($A_1$, $U_1$; $A_2$, $U_2$) and determining a measured sum current ($i_{sum}$) and at least one measured difference current ($i_{diff}$) from measurements in the electrical converter system (10);

determining a sum current error ($i_{sum,err}$) and at least one difference current error ($i_{diff,err}$), wherein the sum current error ($i_{sum,err}$) is determined by subtracting the measured sum current ($i_{sum}$) from the sum current reference $(i^*_{sum})$, and a difference current error ($i_{diff,err}$) is determined by subtracting the respective measured difference current ($i_{diff}$) from the difference current reference $(i^*_{diff})$;

determining a sum flux modification ($\Delta\psi_{sum}$) by multiplying a gain ($\tilde{L}_t$) to the sum current error ($i_{sum,err}$) and at least one difference flux modification ($\Delta\psi_{diff}$) by multiplying a gain ($L_s$) to the respective difference current error ($i_{diff,err}$);

mapping the sum flux modification ($\Delta\psi_{sum}$) and the at least one difference flux modification ($\Delta\psi_{diff}$) to a converter flux modification ($\Delta\psi_{1,abc}$, $\Delta\psi_{2,abc}$) for each electrical converter (28a, 28b);

modifying the pulse pattern ($A_1$, $U_1$; $A_2$, $U_2$) for each electrical converter (28a, 28b) by moving the switching times, such that the converter flux modification ($\Delta\psi_{1,abc}$, $\Delta\psi_{2,abc}$) is compensated by the modified pulse pattern ($u_{1,abc}$, $u_{2,abc}$) with the moved switching times;

applying the modified pulse patterns ($u_{1,abc}$, $u_{2,abc}$) to the electrical converters (28a, 28b).

2. The method of claim 1,

wherein the reference converter voltage $(v^*_{1,dq}, v^*_{2,dq})$ for each electrical converter (28a, 28b) is determined from a sum converter reference $(v^*_{sum,ps,dq}, v^*_{sum,ns,dq})$ and at least one difference converter reference $(v^*_{diff,ps,dq})$.

3. The method of one of claims 1 and 2, further comprising:

determining a positive phase sequence reference $(v^*_{sum,ps,dq}, i^*_{sum,ps,dq}, v^*_{diff,ps,dq}, i^*_{diff,ps,dq})$ and/or a negative phase sequence reference $(v^*_{sum,ns,dq}, i^*_{sum,ns,dq})$ for a sum converter reference $(v^*_{sum}, i^*_{sum})$ and at least one difference converter reference ($v^*_{diff}, i^*_{diff}$);

wherein the reference converter voltage $(v^*_{1,dq}, v^*_{2,dq})$ for each electrical converter (28a, 28b) is determined from the positive phase sequence reference and the negative phase sequence reference.

4. The method of claim 3,

wherein the positive phase sequence reference comprises a sum reference current $(i^*_{sum,ps,dq})$, at least one difference reference current $(i^*_{diff,ps,dq})$, a sum reference converter voltage $(v^*_{sum,ps,dq})$ and at least one difference reference converter voltage $(v^*_{diff,ps,dq})$;

wherein the negative phase sequence reference comprises a sum reference current $(i^*_{sum,ns,dq})$ and a sum reference converter voltage $(v^*_{sum,ns,dq})$.

5. The method of one of the previous claims,

wherein the pulse pattern ($A_1$,$U_1$;$A_2$,$U_2$) is an optimized pulse pattern, which is stored in a look-up table (56) with respect to a modulation index ($m_1$, $m_2$);

wherein the modulation index ($m_1$, $m_2$) and/or phase with respect to a rotating frame ($\gamma_1$,$\gamma_2$) for each electrical converter (28a, 28b) is determined from the respective converter voltage $(v^*_{1,dq}, v^*_{2,dq})$ and/or a dc-link voltage.

6. The method of one of the previous claims,

wherein a ripple current trajectory $(i^*_{1,h,traj}, i^*_{2,h,traj})$ is stored in a look-up table (56) for each pulse pattern ($A_1$, $U_1$; $A_2$, $U_2$);

wherein the sum current reference $(i^*_{sum})$ and the at least one difference current reference $(i^*_{diff})$ are determined from the ripple current trajectories $(i^*_{1,h,traj}, i^*_{2,h,traj})$ of the electrical converters (28a, 28b).

7. The method of claims 1 to 4,

wherein the pulse pattern ($A_1$, $U_1$; $A_2$, $U_2$) is determined online during operation of the electrical converter system (10);

wherein the pulse pattern ($A_1$, $U_1$; $A_2$, $U_2$) is determined with carrier-based pulse width modulation.

8. The method of one of the previous claims,
wherein a different transformer configuration between electrical converters (28a, 28b) is compensated for by applying a rotation ($D^{-1}$) to at least one converter flux modification ($\Delta\psi_{1,abc}$, $\Delta\psi_{2,abc}$).

9. The method of one of the previous claims,
wherein the converter flux modification for each electrical converter (28a, 28b) is scaled with a DC link voltage ($v_{dc,1}$, $v_{dc,2}$) of the electrical converter.

10. The method of one of the previous claims,

wherein the at least two electrical converters (28) are connected in parallel;
wherein the at least two electrical converters (28) are connected to secondary windings (22) of a transformer (16), which is connected with a primary winding (30) to an electrical grid (32) or the at least two electrical converters (28) are connected to windings of an electrical machine (12).

11. The method of one of the previous claims,
wherein the at least two electrical converters (28) are connected in series.

12. A computer program for controlling an electrical converter system (10), which, when being executed by a processor, is adapted to carry out the steps of the method of one of the previous claims.

13. A computer-readable medium, in which a computer program according to claim 12 is stored.

14. A controller (34) for controlling an electrical converter system (10) adapted for performing the method of one of claims 1 to 11.

15. An electrical converter system (10), comprising:

at least two electrical converters (28a, 28b) connected in parallel and/or in series;
a controller (34) according to claim 14.

# Fig. 1

**Fig. 2**

24,28

$v_{dc,x}$

N

$i_{x,a}$ — $v_{x,a}$

$i_{x,b}$ — $v_{x,b}$

$i_{x,c}$ — $v_{x,c}$

36        36        36

**Fig. 3**

22a

$v_1$    $R_s$    $i_1$    $L_s$

$R_p$    $i_{sum}$    $L_p$    $v_{pcc}$    $R_g$    $L_g$    $v_g$

$v_2$    $R_s$    $i_2$    $L_s$

30        32

22b

## Fig. 4

## Fig. 5

## Fig. 6

## Fig. 7

# Fig. 8

EP 4 304 075 A1

**Fig. 9**

EP 4 304 075 A1

**Fig. 10**

Fig. 11

Fig. 12

Fig. 13

Europäisches
Patentamt

European
Patent Office

Office européen
des brevets

# EUROPEAN SEARCH REPORT

Application Number

EP 22 18 2764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEN JIE ET AL: "A high-performance 2x27 MVA machine test bench based on multilevel IGCT converters", 2014 IEEE ENERGY CONVERSION CONGRESS AND EXPOSITION (ECCE), IEEE, 14 September 2014 (2014-09-14), pages 3224-3233, XP032680994, DOI: 10.1109/ECCE.2014.6953839 [retrieved on 2014-11-11] * abstract * * page 3228 - page 3231; figures 1, 4(b), 6, 8, 9 * | 1-15 | INV. H02M7/493 H02M7/487 H02M1/12 H02M1/00 |
| A | US 10 516 328 B2 (ABB SCHWEIZ AG [CH]) 24 December 2019 (2019-12-24) * column 22; figure 9 * | 1-15 | |
| A,D | EP 3 142 236 A1 (ABB TECHNOLOGY AG [CH]) 15 March 2017 (2017-03-15) * columns 30,31 * * columns 9, 22 * | 1-15 | |
| A | Quevedo Daniel E.: "Predictive Control in Power Electronics and Drives: Basic Concepts, Theory, and Methods" In: "Advanced and Intelligent Control in Power Electronics and Drives", 31 December 2014 (2014-12-31), SpringerLink, XP055816338, ISBN: 978-3-319-03401-0 pages 181-226, DOI: 10.1007/978-3-319-03401-0, Retrieved from the Internet: URL:https://www.researchgate.net/publicati on/260360703_Predictive_Control_in_Power_E lectronics_and_Drives_Basic_Concepts_Theor y_and_Methods/link/541394080cf2788c4b359aa b/download> * page 199 * | 1-15 | TECHNICAL FIELDS SEARCHED (IPC) H02M |

The present search report has been drawn up for all claims

| Place of search | Date of completion of the search | Examiner |
|---|---|---|
| The Hague | 6 December 2022 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2764

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | | Publication date | Patent family member(s) | | Publication date |
|---|---|---|---|---|---|
| US 10516328 | B2 | 24-12-2019 | CN | 108028599 A | 11-05-2018 |
| | | | EP | 3326277 A1 | 30-05-2018 |
| | | | US | 2018145579 A1 | 24-05-2018 |
| | | | WO | 2017013125 A1 | 26-01-2017 |
| EP 3142236 | A1 | 15-03-2017 | EP | 3142236 A1 | 15-03-2017 |
| | | | WO | 2017042388 A1 | 16-03-2017 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8766570 B2
- EP 2469692 A1
- EP 2891241 B1
- EP 3729637 A1
- EP 3320609 A1
- EP 3142236 A1
- WO 2019137916 A1